Europäisches Patentamt

European Patent Office

Office européen des brevets

(19)

(11) Veröffentlichungsnummer: **0 093 472**
**B1**

(12) **EUROPÄISCHE PATENTSCHRIFT**

(45) Veröffentlichungstag der Patentschrift:
18.03.87

(21) Anmeldenummer: 83200588.8

(22) Anmeldetag: 22.04.83

(51) Int. Cl.⁴: **C 03 B 5/04**, F 28 D 17/02,
F 28 F 21/04, F 27 B 9/30,
F 27 D 1/04

(54) Prismatischer Hohlstein aus feuerfestem Material für den Gitterbesatz von Kammern eines Glasschmelzofens.

(30) Priorität: 03.05.82 AT 1723/82

(43) Veröffentlichungstag der Anmeldung:
09.11.83 Patentblatt 83/45

(45) Bekanntmachung des Hinweises auf die Patenterteilung:
18.03.87 Patentblatt 87/12

(84) Benannte Vertragsstaaten:
BE DE FR GB IT LU NL

(56) Entgegenhaltungen:
DE-C-710 989
FR-A-2 414 963
FR-A-2 440 659
GB-A-456 036
US-A-2 092 402
US-A-2 467 166

Die Akte enthält technische Angaben, die nach
dem Eingang der Anmeldung eingereicht wurden
und die nicht in dieser Patentschrift enthalten sind.

(73) Patentinhaber: Veitscher Magnesitwerke- Actien-Gesellschaft, Schuhertring 10- 12, A-1010 Wien (AT)

(72) Erfinder: Karl, Otto, Jedleseerstrasse 96/14, A-1210 Wien (AT)

(74) Vertreter: Kliment, Peter, Dipl.- Ing. Mag.- jur.,
Singerstrasse 8, A-1010 Wien (AT)

EP 0 093 472 B1

**Beschreibung**

Die Erfindung betrifft einen prismatischen Hohlstein aus feuerfestem Material für den Gitterbesatz von Kammern eines Glasschmelzofens, welcher eine - vorzugsweise scharfkantige - achteckige und mit in Richtung der Hauptachsen dieser Fläche verlaufenden Erhebungen und dazu korrespondierenden Vertiefungen versehene Grund- und Deckfläche und koaxial zur Längsachse einen durchgehenden Kanal mit einem rechteckigen, gegebenenfalls abgerundete Ecken aufweisenden Querschnitt besitzt, wobei der sich aus der Beziehung: vierfacher Kanalquerschnitt geteilt durch den Umfang des Kanalquerschnitts ergebende hydraulische Durchmesser des Kanals 120 bis 200 mm beträgt und sich aus der Beziehung: hydraulischer Durchmesser geteilt durch die in Richtung der parallel zur Grund- und/oder Deckfläche verlaufenden Hauptachsen gemessene Wandstärke des Steines ein zwischen 3 und 5 liegender Wert ergibt.

Derartige, aus feuerfestem Material, wie Magnesit, Magnesiachromerz bzw. Chromerzmagnesia, Forsterit, Chamotte, bestehende Hohlsteine sind durch die AT-B 365 545 bekannt und haben sich bewährt, da es aufgrund ihrer Formgebung möglich ist, aus ihnen einen stabilen Gitterbesatz der Kammern von Glasöfen aufzubauen und dabei die Wandstärke der Steine soweit zu verringern, daß praktisch das ganze Steinvolumen zur Wärmespeicherung dienen kann. Beispielsweise beträgt die Wandstärke 40 mm, wogegen die früher verwendeten Rechtecksteine zur Erzielung eines stabilen Gitteraufbaus eine Dicke von 60 mm und mehr aufweisen mußten, wobei das Steininnere durch die Abgase nicht erwärmt werden konnte und daher nichts zur Wärmespeicherung beitrug.

Durch entsprechende Formgebung der genannten Hohlsteine wurde versucht, eine gewisse Verwirbelung der durchströmenden Gase und damit einen besseren Wärmeübergang zu erreichen. Beim Betrieb von Glasöfen, deren Kammern eine aus solchen Steinen aufgebaute Gitterung aufweisen, hat sich aber gezeigt, daß die Abgase bzw. die Frischluft im wesentlichen laminar durch die Kanäle der Gitterung strömen, wie dies auch bei aus Rechtecksteinen oder aus Kreuzsteinen aufgebauten Gitterungen der Fall ist.

Es sind bereits Regeneratorgitterungen bekannt, bei denen in den dickwandigen Trennwänden zwischen den Kanälen kleine Öffnungen zum Druckausgleich vorgesehen sind. So zeigt die US-A 2 467 166 eine Rostgitterung, bestehend aus einer Mehrzahl von vertikalen, ebenen, im Abstand voneinander angeordneten Trennwänden mit großer Wandstärke, welche die gasführenden Kanäle begrenzen, und zwischen denen eine Vielzahl von über Eck gestellten Gittersteinen angeordnet sind, welche die Ablenkung und Verwirbelung der Gasströme bewirken. Oberhalb der Gittersteine können in den Trennwänden Queröffnungen vorgesehen sein, die dem Druckausgleich dienen, die aber aufgrund ihrer geringen Größe wohl kaum zur Wirbelbildung beitragen.

Aufgabe der Erfindung ist es, einen Hohlstein der eingangs genannten Art für Glasofengitterungen zu schaffen, der einen verbesserten Wärmeübergang von den Abgasen auf die Steine und insbesondere von diesen auf die Frischluft gewährleistet.

Erfindungsgemäß wird dies dadurch erreicht, daß mindestens zwei, vorzugsweise jedoch alle den Kanal begrenzenden Wände mit einer sich bis zur Außenfläche des Hohlsteines erstreckenden, an der Aufstandsfläche des Steines offenen und nach oben gerundeten Ausnehmung versehen sind, und daß die Fläche einer Ausnehmung zur Bildung eines Expansionsraumes das 0,2- bis 0,6-fache der Fläche einer Innenwand des Kanals des Steines beträgt.

Durch diese als Expansionsräume wirkenden Ausnehmungen wird bei einer aus solchen Steinen aufgebauten Gitterung eine Durchwirbelung der durch die Kanäle strömenden Gase erreicht. Dabei sind aber in den Eckbereichen der Kanäle von unten nach oben durchgehende, nicht unterbrochene Flächen vorhanden.

Durch die Ausnehmungen ergibt sich zwar eine Verringerung der Flächen der den Kanal begrenzenden Flächen der Steine, doch tragen auch die senkrecht zum Kanal stehenden Wände der Ausnehmung zum Wärmeaustausch bei, so daß sich insgesamt sogar eine gewisse Vergrößerung der Heizfläche des Steines ergibt. In diesem Zusammenhang ist es vorteilhaft, wenn das Produkt der Länge der Begrenzungslinie der Ausnehmung mit der Wandstärke des Steines gleich der oder größer als die Fläche der Ausnehmung ist.

Nach einer weiteren Ausgestaltung der Erfindung ist vorgesehen, daß der untere Randbereich der Ausnehmung kongruent zu Abschrägungen von an der Deckfläche des Steines angeordneten Erhebungen ausgebildete Abschrägungen aufweist. Auf diese Weise läßt sich sehr einfach eine den Aufbau einer Gitterung erleichternde Verriegelung der Steine erreichen.

In den Zeichnungen zeigt Fig. 1 ein Schema eines Glasschmelzofens, Fig. 2 eine Schrägansicht einer Ausführungsform eines erfindungsgemäßen Steines, Fig. 3 eine Draufsicht auf eine Lage eines Gitterbesatzes mit erfindungsgemäßen Steinen und Fig. 4 eine Schrägansicht eines Teiles eines Gitterbesatzes mit erfindungsgemäßen Steinen.

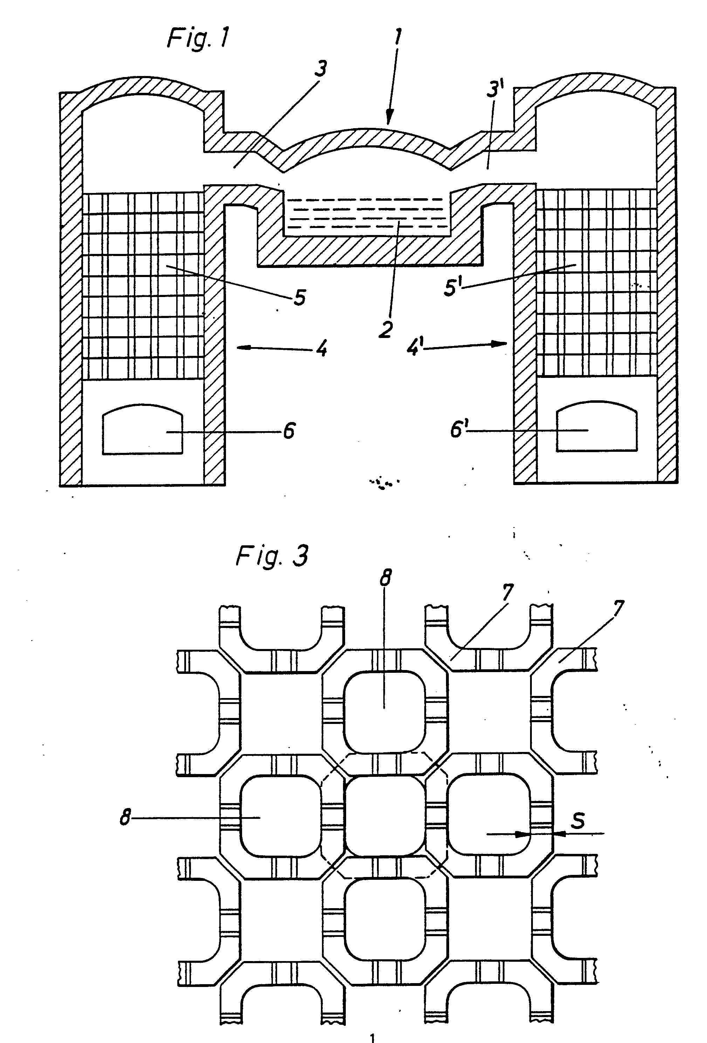

In der Fig. 1 erkennt man die das Schmelzbad 2 beinhaltende Wanne 1, die mit feuerfestem Material ausgekleidet ist. Zu beiden Seiten der Wanne 1 führen Kanäle 3, 3', in denen nicht dargestellte Brenner angeordnet sind, zu den Kammern 4, 4', in denen jeweils ein Gitterbesatz 5, 5' angeordnet ist. Abgesehen von seinen Randzonen besteht jeder Gitterbesatz 5, 5' aus Steinen mit gleichen Abmessungen.

Im Betrieb wird nun einmal die Wanne 1 bzw. das Schmelzbad 2 von dem im Kanal 3' angeordneten Brenner beheizt, wobei die Abgase über den Kanal 3 und durch den Gitterbesatz 5 geführt werden und dabei dessen Besatzsteine erwärmen. Sind diese genügend aufgeheizt, wird umgeschaltet und die Beheizung des Schmelzbades 2 erfolgt mittels des im Kanal 3 angeordneten Brenners, wobei die Verbrennungsluft über die Öffnung 6 in die Kammer 4 eintritt und durch den Gitterbesatz 5 unter Wärmeaufnahme streicht und die Abgase über den Kanal 3' in die Kammer 4' eintreten und diese nach dem Durchströmen des Gitterbesatzes 5', wobei sie Wärme an dessen Besatzsteine abgeben, über die Öffnung 6' verlassen.

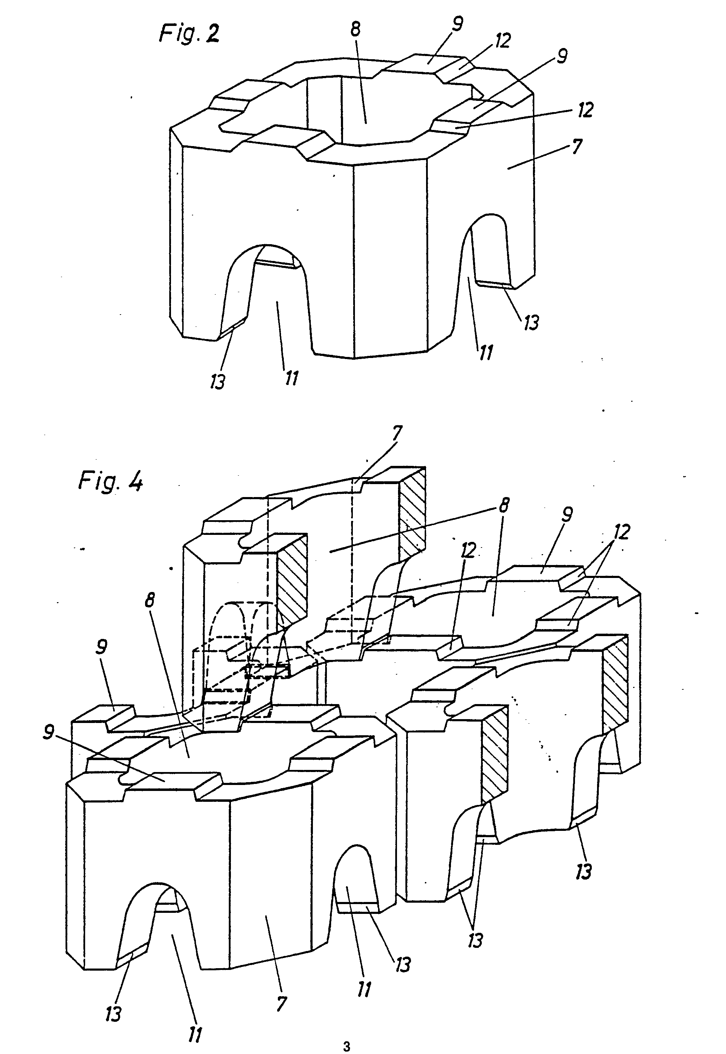

Wie aus Fig. 2, 3 und 4 ersichtlich, weisen die erfindungsgemäßen Steine 7 eine achteckige äußere Umrißlinie, einen im Querschnitt viereckigen, zentralen, durchgehenden Kanal 8 und eine im wesentlichen gleichbleibende Wandstärke S auf. Werden die Steine 7 lagenweise versetzt aufeinander geschichtet, so entstehen vertikale Kanäle, die in einer Lage durch die Innenflächen der Kanäle 8 der Steine 7 und, wie in Fig. 3 strichliert sowie in Fig. 4 dargestellt ist, in der jeweils nächsten Lage durch die Außenflächen von vier aneinander angrenzenden Steinen 7 gebildet sind.

Nach der Erfindung ist der Stein 7 mit Ausnehmungen 11 versehen, die an der Aufstandsfläche des Steines 7 offen sind und nach oben zu gerundet abgeschlossen sind. Diese Ausnehmungen 11 erstrecken sich beim gezeigten Beispiel von jeder der vier den Kanal 8 des Steines 7 begrenzenden Innenflächen bis zur Außenfläche des Steines 7.

An der Deckfläche eines jeden Steines 7 sind vier sich in Richtung der Hauptachsen dieser Fläche erstreckende Erhebungen 9 vorgesehen. Diese Erhebungen 9 sind trapezförmig ausgebildet, wobei deren schräge Flächen 12 mit den schrägen Flächen 13 korrespondieren, die den unteren Randbereich der Ausnehmungen 11 bilden. Dadurch läßt sich auf einfache Weise ein exaktes Stapeln der Steine 7 beim Aufbau des Gitterbesatzes 5, 5' sicherstellen, was die Anwendung der eingangs erwähnten dünnen Wandstärke zuläßt.

Bei einem aus erfindungsgemäßen Hohlsteinen 7 aufgebauten Gitterbesatz besteht die Möglichkeit, in die Ausnehmungen 11 geeignete Stocherwerkzeuge einzuführen, um Ansätze, die sich während des Betriebes bilden, zu entfernen.

## Patentansprüche

1. Prismatischer Hohlstein (7) aus feuerfestem Material für den Gitterbesatz (5, 5') von Kammern (4, 4') eines Glasschmelzofens, welcher eine - vorzugsweise scharfkantige - achteckige und mit in Richtung der Hauptachsen dieser Fläche verlaufenden Erhebungen (9) und dazu korrespondierenden Vertiefungen versehene Grund- und Deckfläche und koaxial zur Längsachse einen durchgehenden Kanal (8) mit einem rechteckigen, gegebenenfalls abgerundete Ecken aufweisenden Querschnitt besitzt, wobei der sich aus der Beziehung: vierfacher Kanalquerschnitt geteilt durch den Umfang des Kanalquerschnitts ergebende hydraulische Durchmesser des Kanals 120 bis 200 mm beträgt und sich aus der Beziehung: hydraulischer Durchmesser geteilt durch die in Richtung der parallel zur Grund- und/oder Deckfläche verlaufenden Hauptachsen gemessene Wandstärke des Steines ein zwischen 3 und 5 liegender Wert ergibt, dadurch gekennzeichnet, daß mindestens zwei, vorzugsweise jedoch alle den Kanal (8) begrenzenden Wände mit einer sich bis zur Außenfläche des Hohlsteines (7) erstreckenden, an der Aufstandsfläche des Steines (7) offenen und nach oben gerundeten Ausnehmung (11) versehen sind, und daß die Fläche einer Ausnehmung (11) zur Bildung eines Expansionsraumes das 0,2- bis 0,6-fache der Fläche einer Innenwand des Kanals (8) des Steines (7) beträgt.

2. Hohlstein nach Anspruch 1, dadurch gekennzeichnet, daß der untere Randbereich der Ausnehmung (11) kongruent zu Abschrägungen (12) von an der Deckfläche des Steines (7) angeordneten Erhebungen (9) ausgebildete Abschrägungen (13) aufweist.

3. Hohlstein nach Anspruch 1 oder 2, dadurch gekennzeichnet, daß das Produkt der Länge der Begrenzungslinie der Ausnehmung (11) mit der Wandstärke (S) des Steines (7) gleich der oder größer als die Fläche der Ausnehmung (11) ist.

## Claims

1. A prismatic hollow brick (7) of refractory material for the checkerwork (5, 5') in chambers (4, 4') of a glass melting furnace, the brick having each a - preferably sharp edged - octogonal bottom and top surface, one of the surfaces having elevated portions (9) and the other surface having corresponding depressed portions extending in the direction of the major axes of these surfaces, and a through passage (8) of tetragonal cross section extending coaxially with the longitudinal axis, the through passage optionally having rounded corners, the hydraulic diameter of the through passage being from 120 to 200 mm and being defined by the relationship: four times the through passage cross section divided by the periphery of the through passage cross section, the ratio of the hydraulic diameter to the wall thickness of the brick measured in the direction of the major axes extending parallel to the top and bottom surfaces being between 3 and 5, characterized in that at least two, preferably all walls limiting the through passage (8) have recessed passages (11) extending from the through passage (8) to a respective one of the outer walls of the hollow brick (7), the recessed passages (11) being open at the bottom surface of the brick (7) and tapering upwards to a rounded end, and that the area of each recessed passage (11) is 0.2 to 0.6 times the area of a respective inner wall defining the through passage (8) of the brick (7) for forming an expansion chamber.

2. A hollow brick according to claim 1, characterized in that the bottom ends of the recessed passages (11) have bevelled end faces (13) being congruent with bevelled end faces (12) of elevated portions (9) provided on the top surface of the brick (7).

3. A hollow brick according to claim 1 or 2, characterized in that the product of the length of the line delimiting the recessed passage (11) and the wall thickness (S) of the brick (7) is equal to or greater than the area of the recessed passage (11).

## Revendications

1. Brique creuse (7) prismatique en matériau réfractaire pour l'empilage (5, 5') des chambres (4, 4') d'un four de verrerie, la brique présentant une surface de base et une surface de recouvrement octogonale, de préférence à arêtes vives et munies d'élévations (9) s'étendant dans le sens de l'axe principal de la surface et d'encastrements correspondants, et un canal (8) continu, coaxial à l'axe longitudinal, avec une section transversale rectangulaire, à angles éventuellement arrondis, le diamètre hydraulique du canal, obtenu à partir de la relation: quatre fois la section du canal divisée par la circonférence de la section du canal, ce montant à 120 à 200 mm et la valeur obtenue à partir de la relation: diamètre hydraulique divisé par l'épaisseur de paroi de la brique mesurée dans le sens de l'axe principal s'étendant parallèlement à la surface de base et/ou de recouvrement, étant comprise entre 3 et 5, brique caractérisée en ce qu'au moins deux, mais de préférence toutes les parois limitant le canal (8) sont munies d'une cavité (11), s'étendant jusqu'à la face extérieure de la brique creuse (7), ouverte vers la surface de base de la brique (7) et arrondie vers le haut et que la surface d'une cavité (11) permet la formation d'un volume d'expansion de 0,2 à 0,6 fois la surface d'une paroi intérieure du canal (8) de la brique (7).

2. Brique creuse selon la revendication 1, caractérisée en ce que la zone de bordure inférieure de la cavité (11) présente des chanfreins (13) conçus de façon congruente par rapport aux chanfreins (12) des élévations (9) situés sur la face de recouvrement de la brique (7).

3. Brique creuse selon les revendications 1 ou 2, caractérisée en ce que le produit de la longueur de la ligne délimitant la cavité (11) par l'épaisseur de paroi (S) de la brique (7) est égal ou supérieur à la surface de la cavité (11).

Fig. 1

Fig. 3

Fig. 2

Fig. 4